Europäisches Patentamt

European Patent Office

Office européen des brevets

(19)

(11) Veröffentlichungsnummer : **0 069 347**
**B1**

(12) **EUROPÄISCHE PATENTSCHRIFT**

(45) Veröffentlichungstag der Patentschrift :
30.10.85

(21) Anmeldenummer : 82105871.6

(22) Anmeldetag : 01.07.82

(51) Int. Cl.⁴ : **G 01 N  3/02**, G 01 N  3/08,
G 21 C  1/00

(54) Zylinderförmige Probenkapsel.

(30) Priorität : 06.07.81 DE 3126576

(43) Veröffentlichungstag der Anmeldung :
12.01.83 Patentblatt 83/02

(45) Bekanntmachung des Hinweises' auf die Patenterteilung : 30.10.85 Patentblatt 85/44

(84) Benannte Vertragsstaaten :
DE FR GB NL

(56) Entgegenhaltungen :
GB-A- 972 583
US-A- 3 538 757
NAVY TECHNICAL DISCLOSURE BULLETIN, Band 3, Nr. 2, Februar 1978, Seiten 77-81, Arlington (USA); F.J. LOSS et al.: "High temperature, water cooled, pressure compensated load cell".

(73) Patentinhaber : **EUROPÄISCHE ATOMGEMEIN-SCHAFT (EURATOM)**
**Bâtiment Jean Monnet Plateau du Kirchberg Boîte Postale 1907**
**L-1019 Luxembourg (LU)**

(72) Erfinder : **May, Peter**
**JRC Petten Postbus 2**
**NL-1755 ZG Petten (NL)**

(74) Vertreter : **Weinmiller, Jürgen**
**Zeppelinstrasse 63**
**D-8000 München 80 (DE)**

Jouve, 18, rue St-Denis, 75001 Paris, France

**Beschreibung**

Die Erfindung bezieht sich auf eine zylinderförmige Probenkapsel zur Aufnahme und Halterung mehrerer U-förmiger Materialproben, die einer kontrollierten mechanischen Spannung durch Spreizen der U-Schenkel ausgehend von einem an einer der Stirnseiten der Kapsel liegenden Kraftgeber aussetzbar sind.

Die Erfindung ist insbesondere auf Probenkapseln für Strahlungsexperimente, beispielsweise in einem Hochflußreaktor, anwendbar.

Will man bei Strahlungsexperimenten Materialproben einer mechanischen Spannung unterziehen, beispielsweise um Versprödungs- oder Ermüdungserscheinungen unter Strahleneinfluß zu untersuchen, dann muß man die Proben in eine Spannvorrichtung einlegen, die die gewünschte statische oder sich zyklisch ändernde mechanische Spannung erzeugt und auch unter Strahlungs- und Temperatureinfluß definiert aufrechterhält.

Bekannte derartige Spannvorrichtungen eignen sich praktisch nur zum Einspannen einer einzigen Probe und sind zudem wenig kompakt, so daß teuerer Raum in den Bestrahlungskanälen vergeudet wird.

Aufgabe der Erfindung ist es, eine Probenkapsel zur Aufnahme und Halterung mehrerer Materialproben der eingangs genannten Art anzugeben, bei der ein einziger Kraftgeber in definierter Weise gleichmäßig alle Proben einer mechanischen Spannung aussetzt. Weiter soll die Probenkapsel kompakt und zylinderförmig sein und sich damit für Bestrahlungsexperimente besonders eignen.

Diese Aufgabe wird erfindungsgemäß dadurch gelöst, daß die Proben abwechselnd mit Scheiben gestapelt und mit diesen in der Probenkapsel liegend untergebracht sind, daß die beiden einer Probe zugeordneten Scheiben exzentrisch zur Achse der Probenkapsel mit je einem der U-Schenkel der Probe in Drehrichtung um die genannte Achse gekoppelt sind, daß ein Schenkel der untersten Probe des Stapels mit dem Boden der Probenkapsel drehfest gekoppelt ist, während ein Schenkel der obersten Probe an einen als gemeinsamer Kraftgeber wirkenden Drehmomentgenerator gekoppelt ist, und daß jede Probe von einem Abstandsring im wesentlichen kräftefrei umgeben ist, auf dem die beiden benachbarten Scheiben aufliegen.

Vorzugsweise trägt jede Scheibe auf jeder ihrer einer Probe zugwandten Stirnseite einen Mitnahmestift, der mit einem entsprechenden Loch im Schenkel der Probe zusammenwirkt.

In einer bevorzugten Ausführungsform der erfindungsgemäßen Probenkapsel sind die Abstandsringe mit Mitteln versehen, die die Reibungsverluste zwischen aufeinanderfolgenden Scheiben verringern, wobei diese Mittel vorzugsweise aus Auflagen aus reibungsarmen Materialien auf den Stirnseiten der Abstandsringe bestehen.

Die Erfindung wird nun anhand zweier bevorzugter Ausführungsbeispiele mit Hilfe der Zeichnungen näher erläutert.

Fig. 1 zeigt in Explosivdarstellung schematisch eine Probenkapsel, wobei die Instrumentierung zur Messung von Temperatur und mechanischer Spannung aus Gründen besserer Übersicht weggelassen wurde.

Fig. 2 zeigt im Schnitt eine weitere Probenkapsel.

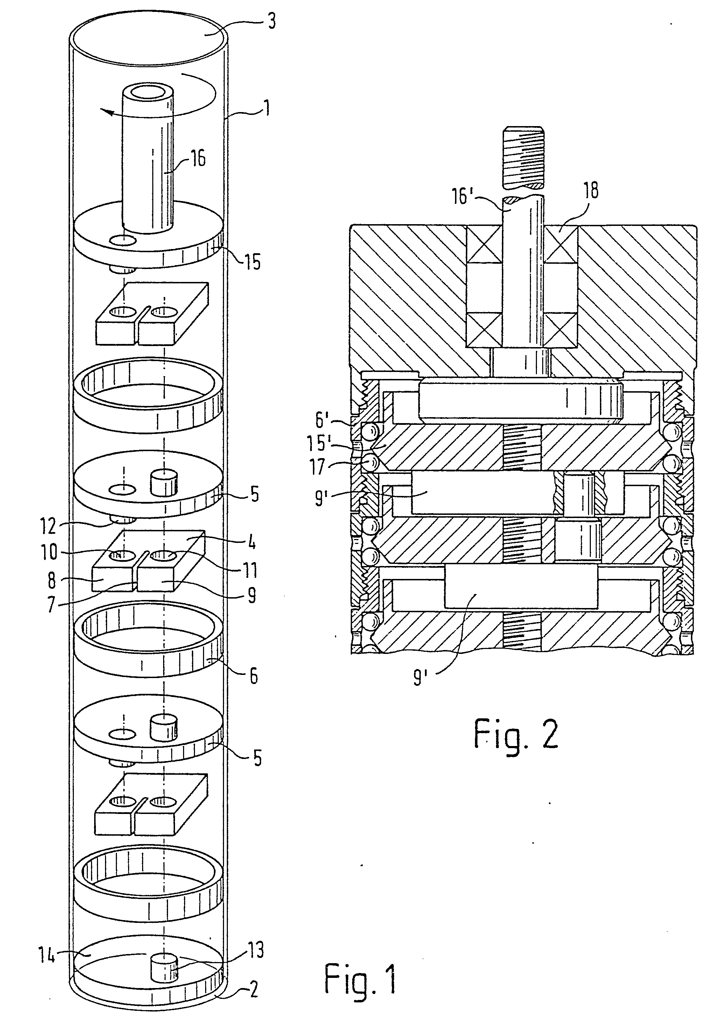

Die Probenkapsel gemäß Fig. 1 hat eine zylindrische Hülle 1, die einen Boden 2 aufweist und an der oberen Stirnseite 3 offen ist. In dieser Hülle befindet sich ein Stapel, der sich abwechselnd aus drei Elementen zusammensetzt, nämlich der eigentlichen Probe 4, einer Scheibe 5 und einem die Probe lose umgebenden Abstandsring 6.

Die Probe 4, beispielsweise ein zu untersuchendes Metall, besteht aus einem Parallelepiped, das parallel zu zwei Seitenflächen einen Einschnitt 7 besitzt, aufgrund dessen man die Probe als U-förmig bezeichnen kann. Die mechanische Belastung der Probe soll durch Spreizen der Schenkel 8 bzw. 9 erfolgen. Hierzu ist jeder der Schenkel mit einem Loch 10 bzw. 11 versehen, in das ein Mitnehmerstift 12 bzw. 13 exzentrisch zur Stapelachse eingreift. Die Mitnehmerstifte, die an einer Probe angreifen, stehen aus zwei Scheiben hervor, die sich zu beiden Seiten der betrachteten Probe befinden. Die unterste Scheibe 14 ist drehfest auf dem Boden 2 der Hülle 1 verankert, während die oberste Scheibe 15 des Stapels mit der Welle 16 eines nicht dargestellten Drehmomentgenerators fest gekoppelt ist, der sich jenseits der Öffnung 3 der Hülle befindet.

Die Abstandsringe 6 halten je zwei benachbarte Scheiben 5 in einem solchen Abstand, daß die Probe nicht axial zwischen den Scheiben eingeklemmt wird. Sie besitzen auf ihren der Reibung ausgesetzten Seiten reibungsreduzierende Auflagen, wie etwa aus Graphit, um die Reibungsverluste bei Relativdrehung zweier benachbarter Scheiben zu verringern. Statt solcher Auflagen kann man auch die Scheiben 5 aus reibungsarmem Material herstellen bzw. mit entsprechenden Auflagen versehen.

Jede der Scheiben, mit Ausnahme der untersten Scheibe 14 und der obersten Scheibe 15, besitzt zwei Mitnahmestifte, von denen der eine mit einem Schenkel der darunterliegenden Probe und der andere mit einem Schenkel der darüberliegenden Probe zusammenwirkt. Dabei ist die gegenseitige Stellung der beiden Stifte auf einer Scheibe ohne Bedeutung. Die Stifte könnten also beispielsweise auch in Flucht zueinander angeordnet sein.

Sind die Ringe, Scheiben und Proben dicht übereinander gestapelt und wird auf die oberste Scheibe 15 ein Drehmoment ausgeübt, dann verteilt sich diese Belastung gleichmäßig auf alle Proben, wenn die Reibung vernachlässigt werden kann. Das Drehmoment kann je nach den Versuchserfordernissen statisch oder gemäß einer periodischen Funktion variabel sein. Die Proben stützen sich nicht an ihrem zugeordneten Ring ab, so daß bei gegenseitiger Verdrehung von Probe und Ring keine Reibungsverluste entstehen.

Der Drehmomentgenerator kann als Hydraulikmotor oder als elektrischer Motor ausgebildet sein. Im letzteren Fall wird das Gesamtdrehmoment auf einfache Weise durch Messung des Motorstroms ermittelt. Natürlich können zusätzliche induktive Übertrager direkt an der Motorwelle zur Messung des wahren Drehmoments angebracht sein. Die Dehnung der Proben, die sich aus der Spreizung ihrer U-Schenkel ergibt, kann individuell für eine Probe oder auch für den ganzen Stapel ermittelt werden, indem man die relative Winkelbewegung zweier einer Probe zugeordneter Scheiben mißt, bzw. die Gesamtverdrehung der obersten Scheibe 15 auswertet.

Die Abstandsringe 6 erfüllen die weitere Aufgabe, die Stücke einer zerbrochenen Probe zu umschließen. Es ist deshalb möglich, die Bestrahlung bzw. Messung nach dem Bruch einer oder mehrerer Proben fortzusetzen, da nach kurzer Drehung der über einer gebrochenen Probe liegenden Scheibe deren Mitnahmestift gegebenenfalls über ein Bruchstück der Probe mit dem nach oben zeigenden Mitnahmestift der darunterliegenden Scheibe erneut in Kraftschluß gerät.

Die Probenkapsel kann waagerecht oder senkrecht in einen Bestrahlungskanal eingesetzt werden.

Die Kapsel wurde für einen Bestrahlungskanal konzipiert, in dem Temperaturen bis zu 1 000 K und ein Neutronenfluß von bis zu $4,5 \times 10^{14}$ cm$^{-2}$ sec$^{-1}$ (E > 0,1 MeV) herrschen. Die Proben können statisch oder periodisch (Periodendauer beispielsweise 0,5 sec) mit einer Maximalkraft von 5 000 N belastet werden. Die Belastung kann zeitlich einen beliebigen Verlauf nehmen, beispielsweise sinusförmig, rechteckförmig oder sägezahnförmig gewählt werden.

Die Proben können innerhalb der Hülle einem Inertgas oder einem anderen für die Prüfzwecke gewünschten Medium ausgesetzt sein. Hierzu kann die Mantelfläche der Hülle auch perforiert sein. Auch in Achsrichtung kann ein Medium die Kapsel durchfliessen, wenn man die Scheiben mit geeigneten Durchlässen versieht.

In Ausgestaltung der Erfindung ist es auch möglich, die Kopplung des Drehmomentgenerators 16 mit den einzelnen Proben anders als dargestellt zu gestalten. So könnten die Stifte 12, 13 auch Bestandteile der Proben sein, während die Scheiben entsprechende Löcher aufweisen. Auch über Radialrippen an den Scheiben und den Proben könnte die Kopplung in Drehrichtung erfolgen.

Fig. 2 zeigt im Schnitt eine Variante zu der oben erläuterten Probenkapsel, bei der die Abstandsringe 6' so miteinander verschraubt sind, daß sie einerseits gemeinsam ein Hüllrohr und andererseits zwischen je zwei Ringen auf ihrer Innenseite entlang von Umfangslinien Rillen für die Aufnahme von Kugellagern 17 bilden. In jeder Rille befinden sich zwei Reihen von Kugeln, zwischen die der im Profil V-förmige Rand der zugeordneten Scheibe 5' eingreift. In dieser Ausführungsform werden die Proben 9' besonders frei von unerwünschten Kräften gehalten, da Reibungskräfte bei Betätigung des Drehmomentgenerators nur in den Kugellagern entstehen und dementsprechend gering sind. Die zu diesem Generator führende Welle 16' ist zudem in einem weiteren Kugellager 18 geführt. Die Figur zeigt nur das obere Kapselende mit der obersten Scheibe 15' und zwei Proben 9', sowie einer Zwischenscheibe 5'.

Die beschriebene Probenkapsel ermöglicht also die Bestrahlung oder allgemein die Untersuchung von vielen Materialproben gleichzeitig in definierter Weise mithilfe eines einzigen Kraftgebers. Damit erfüllt die Kapsel die Forderung nach kompakter Stapelung der Proben und guter Ausnutzung des Kapselraums.

## Patentansprüche

1. Zylinderförmige Probenkapsel zur Aufnahme und Halterung mehrerer U-förmiger Materialproben (4), die einer kontrollierten mechanischen Spannung durch Spreizen der U-Schenkel (8, 9) ausgehend von einem an einer der Stirnseiten der Proben- (1) Kapsel liegenden Kraftgeber aussetzbar sind, dadurch gekennzeichnet, daß die Proben (4) abwechselnd mit Scheiben (5) gestapelt und mit diesen in der Probenkapsel (1) liegend untergebracht sind, daß die beiden einer Probe (4) zugeordneten Scheiben (5) exzentrisch zur Achse der Probenkapsel (1) mit je einem der U-Schenkel (8, 9) der Probe (4) in Drehrichtung um die genannte Achse gekoppelt sind, daß ein Schenkel der untersten Probe des Stapels mit dem Boden (2) der Probenkapsel drehfest gekoppelt ist, während ein Schenkel der obersten Probe an einen als gemeinsamen Kraftgeber wirkenden Drehmomentgenerator (16) gekoppelt ist, und daß jede Probe (4) von einem Abstandsring (6) im wesentlichen kräftefrei umgeben ist, auf dem die beiden benachbarten Scheiben (5) aufliegen.

2. Probenkapsel nach Anspruch 1, dadurch gekennzeichnet, daß jede Scheibe (5) auf jeder ihrer einer Probe (4) zugewandten Stirnseiten einen Mitnehmerstift (12, 13) trägt, der mit einem entsprechenden Loch (10, 11) im Schenkel der Probe (4) zusammenwirkt.

3. Probenkapsel nach Anspruch 1 oder 2, dadurch gekennzeichnet, daß die Abstandsringe (6) mit Mitteln (17) versehen sind, die die Reibungsverluste zwischen aufeinanderfolgenden Scheiben (5) verringern.

4. Probenkapsel nach Anspruch 3, dadurch gekennzeichnet, daß die Mittel (17) zur Verringerung der Reibung aus Auflagen aus reibungsarmen Material auf den Stirnseiten der Abstandsringe (6) bestehen.

## Claims

1. A cylindrical test capsule for accommodating and holding a plurality of U-shaped material samples (4) which can be subjected to a controlled mechanical stress by the spreading apart of the U-arms (8, 9), this stress originating from a force-generator situated at one front end of the test capsule (1), characterized in that the samples (4) are alternately stacked with discs (5) and are accommodated together with these discs in a flat position in the test capsule (1), that the two discs (5) associated with one sample (4) are coupled for rotation around the axis of the test capsule (1) eccentrically relative to the axis of said test capsule with a respective U-arm (8, 9) of the sample (4), that one arm of the lowermost sample of the stack is rotatively coupled with the bottom (2) of the test capsule, whereas one arm of the uppermost sample is coupled to a torque generator (16) acting as common force generator, and in that each sample (4) is surrounded substantially loosely by a spacing ring (6) on which the two adjacent discs (5) are supported.

2. A test capsule as claimed in claim 1, characterized in that each disc (5) carries on each of its end faces facing a sample (4) a driving stud (12, 13) which cooperates with a corresponding hole (10, 11) in the arm of the sample (4).

3. A test capsule as claimed in claim 1 or claim 2, characterized in that spacing rings (6) are provided with means (17) for reducing the frictional losses between successive discs (5).

4. A test capsule as claimed in claim 3, characterized in that the means (17) for reducing the frictional losses consist of coatings of a material. of low friction rate on the front faces of the spacing rings (6).

## Revendications

1. Capsule cylindrique de test pour la réception et le maintien de plusieurs échantillons d'un matériau en forme de U (4), qui sont susceptibles d'être soumis à une tension mécanique contrôlée par écartement de ses bras (8, 9), cette tension provenant d'un générateur de force disposé à une des faces frontales de la capsule de test, caractérisée par le fait que les échantillons (4) sont empilés alternativement avec des disques (5) et disposés couchés avec ces derniers dans la capsule de test (1), que les deux disques (5) associés à un échantillon (4) sont couplés en rotation autour de l'axe de la capsule excentriquement par rapport audit axe avec respectivement l'un des bras (8, 9) de l'échantillon, qu'un bras de l'échantillon le plus bas de la pile est couplé rigidement en rotation avec le fond (2) de la capsule de test (1), tandis qu'un bras de l'échantillon le plus haut est couplé à un générateur de couple de rotation agissant en tant que générateur de force commun, et que chaque échantillon (4) est entouré essentiellement sans force par une bague d'écart (6) sur laquelle s'appuient les deux disques adjacents (5).

2. Capsule de test selon la revendication 1, caractérisée par le fait que chaque disque (5) porte, sur chacune de ses faces frontales tournée vers un échantillon (4), une broche d'entraînement (12, 13) qui coopère avec un trou correspondant dans le bras de l'échantillon (4).

3. Capsule de test selon la revendication 1 ou 2, caractérisée par le fait que les bagues d'écart (6) sont pourvues de moyens (17), qui diminuent les pertes dues au frottement entre les disques successifs (5).

4. Capsule de test selon la revendication 3, caractérisée par le fait que les moyens (17) pour diminuer le frottement consistent en des couches en un matériau à faible friction appliquées sur les faces frontales des bagues d'écart (6).

Fig. 1

Fig. 2